# EUROPEAN PATENT APPLICATION

(11) **EP 4 645 449 A1**
(43) Date of publication of application: **05.11.2025**
(21) Application number: 23910955.6
(22) Date of filing: 29.12.2023
(51) Int. Cl.: H01M 4/36, H01M 4/38, H01M 4/587, H01M 4/62, H01M 10/0525

(54) **NEGATIVE ELECTRODE MATERIAL, SECONDARY BATTERY AND ELECTRONIC DEVICE**

(30) Priority: 30.12.2022 CN 202211721043
(71) Applicant: Ningde Amperex Technology Limited, Ningde, Fujian 352100 (CN)
(72) Inventor: HU, Guangwu, Ningde, Fujian 352100 (CN)
(74) Representative: Icosa
(86) International application number: PCT/CN2023/143375
(87) International publication number: WO 2024/141042

(57) **Abstract**

This application provides a negative electrode material, a secondary battery, and an electronic device. The secondary battery includes a negative electrode plate. The negative electrode plate includes a negative electrode material. The negative electrode material includes a composite material. The composite material includes elemental silicon and a carbon material. A ratio of an intensity of a main peak to an intensity of a secondary peak of a first-cycle delithiation dQ/dV curve of the composite material is 1.15 to 1.65. The composite material in the secondary battery provided in this application satisfies the above characteristics, so that the secondary battery exhibits excellent cycle performance and expansion resistance in addition to a relatively high specific capacity.

## Description

This application claims priority to Chinese Patent Application No. 202211721043.X, filed with the Chinese Patent Office on December 30, 2022 and entitled "NEGATIVE ELECTRODE MATERIAL, SECONDARY BATTERY, AND ELECTRONIC DEVICE", which is incorporated herein by reference in its entirety.

### TECHNICAL FIELD

This application relates to the field of electrochemical technology, and in particular, to a negative electrode material, a secondary battery, and an electronic device.

### BACKGROUND

By virtue of advantages such as no memory effect, a small size, a light weight, and environment-friendliness, secondary batteries such as a lithium-ion battery are widely used in various aspects of everyday life nowadays. In recent years, the secondary batteries have developed rapidly in the field of new energy vehicles and large-scale energy storage.

However, among the negative electrode materials of conventional commercialized secondary batteries, for example, among the negative electrode materials of a lithium-ion battery, carbon-based materials such as graphite are of a relatively low capacity, and result in a relatively low energy density of the secondary batteries; and silicon-based materials are prone to expansion, and result in relatively low cycle performance of the secondary batteries, thereby greatly restricting such materials from being applied massively in the secondary batteries.

### SUMMARY

An objective of this application is to provide a negative electrode material, a secondary battery, and an electronic device so that the secondary battery exhibits excellent cycle performance and expansion resistance in addition to a relatively high specific capacity. Specific technical solutions are as follows:
A first aspect of this application provides a negative electrode material. The negative electrode material includes a composite material. The composite material includes elemental silicon and a carbon material. A ratio of an intensity of a main peak to an intensity of a secondary peak of a first-cycle delithiation dQ/dV curve of the composite material is 1.15 to 1.65. The main peak of the dQ/dV curve means a characteristic peak corresponding to a voltage of 0.25 V to 0.3 V. The secondary peak of the dQ/dV curve means a characteristic peak corresponding to a voltage of 0.4 V to 0.45 V. The composite material in the negative electrode material provided in this application satisfies the above characteristics, so that the secondary battery exhibits significantly improved cycle performance and expansion resistance in addition to a relatively high specific capacity.

In some embodiments of this application, the elemental silicon includes at least one of silicon nanoparticles or silicon submicron particles, thereby improving the cycle performance and expansion resistance of the secondary battery.

In some embodiments of this application, based on a total mass of the composite material, a mass percentage of the carbon material is a, a is 40 wt% to 90 wt%, a mass percentage of the elemental silicon is b, and b is 10 wt% to 60 wt%. When the mass percentage a of the carbon material and the mass percentage b of the elemental silicon of the composite material fall within the above range, the cycle performance and expansion resistance of the secondary battery are improved.

In some embodiments of this application, based on a total mass of the composite material, a mass percentage of the carbon material is a, a is 55 wt% to 70 wt%, a mass percentage of the elemental silicon is b, and b is 30 wt% to 45 wt%. When the mass percentage a of the carbon material and the mass percentage b of the elemental silicon of the composite material fall within the above range, the cycle performance and expansion resistance of the secondary battery are improved.

In some embodiments of this application, a ratio of a to b is 1 to 3. When the ratio of a to b falls within the above range, the cycle performance and expansion resistance of the secondary battery are improved.

In some embodiments of this application, in a cross-section of a particle of the composite material, a silicon content in a region I is c, a silicon content in a region II is d, and a silicon content in a region III is e, satisfying: c > d > e; the region I is a region that is 0.5 µm to 1.5 µm distant from an edge of the cross-section along a radial direction of the cross-section, the region II is a region that is 2.5 µm to 3.5 µm distant from the edge of the cross-section along the radial direction of the cross-section, and the region III is a region that is 4.5 µm to 5.5 µm distant from the edge of the cross-section along the radial direction of the cross-section, thereby improving the cycle performance and expansion resistance of the secondary battery.

In some embodiments of this application, a particle diameter Dv₅₀ of the composite material is 5 µm to 10 µm, and a particle diameter Dv₉₉ of the composite material is 15 µm to 25 µm. When the particle diameters Dv₅₀ and Dv₉₉ of the composite material are controlled to fall within the above ranges, the cycle performance and expansion resistance of the secondary battery are improved.

In some embodiments of this application, a specific surface area of the composite material is 1 m²/g to 50 m²/g. When the specific surface area of the composite material falls within the above range, the cycle performance and expansion resistance of the secondary battery are improved.

In some embodiments of this application, no crystallization peak of silicon exists in an X-ray diffraction pattern of the composite material, thereby improving the cycle performance and expansion resistance of the secondary battery.

In some embodiments of this application, in a Raman spectrum of the composite material, an intensity ratio between a peak corresponding to a wavenumber 521 cm⁻¹ and a peak corresponding to a wavenumber 480 cm⁻¹, denoted as I₅₂₁/I₄₈₀, is 0.6 to 1, thereby improving the cycle performance and expansion resistance of the secondary battery.

In some embodiments of this application, based on a total mass of the composite material, a mass percentage of oxygen in the composite material is 1 wt% to 5 wt%. When the mass percentage of oxygen in the composite material falls within the above range, the cycle performance and expansion resistance of the secondary battery are improved.

In some embodiments of this application, a first-cycle delithiation specific capacity of the composite material is 500 mAh/g to 2500 mAh/g. When the first-cycle delithiation specific capacity of the composite material falls within the above range, the cycle performance and expansion resistance of the secondary battery are improved.

A second aspect of this application provides a secondary battery, including a positive electrode plate, a negative electrode plate, and a separator. The negative electrode plate includes the negative electrode material disclosed in any one of the preceding embodiments. Therefore, the secondary battery provided in this application exhibits good cycle performance and expansion resistance.

In some embodiments of this application, after the secondary battery is cycled at 25 °C for 100 cycles, based on a total mass of the composite material in the negative electrode plate, a mass percentage of oxygen in the composite material is 5 wt% to 15 wt%, where a cycling process in each of the cycles is to charge the secondary battery at a current of 1 C and then discharge the secondary battery at a current of 0.5 C until a cutoff current of 0.025 C. When the mass percentage of oxygen in the composite material of the negative electrode plate is controlled to fall within the above range, the cycle performance of the secondary battery is improved.

A third aspect of this application provides an electronic device. The electronic device includes the secondary battery disclosed in any one of the preceding embodiments. Therefore, the electronic device provided in this application exhibits good operating performance.

Beneficial effects of this application are as follows:
This application provides a negative electrode material, a secondary battery, and an electronic device. The secondary battery includes a negative electrode plate. The negative electrode plate includes a negative electrode material. The negative electrode material includes a composite material. The composite material includes elemental silicon and a carbon material. A ratio of an intensity of a main peak to an intensity of a secondary peak of a first-cycle delithiation dQ/dV curve of the composite material is 1.15 to 1.65. The composite material in the secondary battery provided in this application satisfies the above characteristics, so that the secondary battery exhibits excellent cycle performance and expansion resistance in addition to a relatively high specific capacity.

Definitely, a single product or method in which the technical solution of this application is implemented does not necessarily achieve all of the above advantages concurrently.

### BRIEF DESCRIPTION OF DRAWINGS

To describe the technical solutions in some embodiments of this application or the prior art more clearly, the following outlines the drawings to be used in the description of some embodiments of this application or the prior art. Evidently, the drawings outlined below merely illustrate some embodiments of this application, and a person of ordinary skill in the art may derive other embodiments from the drawings.
FIG. 1 shows a first-cycle charge-discharge curve of a composite material according to Embodiment 1;
FIG. 2 is a differential capacity curve of a composite material during first-cycle delithiation according to Embodiment 1;
FIG. 3 is a scanning electron microscope (SEM) image of a cross-section of a particle of a composite material according to Embodiment 1;
FIG. 4 is a schematic diagram of different regions selected in a cross-section of a particle of a composite material according to Embodiment 1; and
FIG. 5 is an X-ray diffraction pattern of a composite material according to Embodiment 1.

### DETAILED DESCRIPTION

The following describes the technical solutions in some embodiments of this application clearly in detail with reference to the drawings appended hereto. Evidently, the described embodiments are merely a part of but not all of the embodiments of this application. All other embodiments derived by a person of ordinary skill in the art based on the embodiments of this application without making any creative efforts still fall within the protection scope of this application.

It is hereby noted that in the following description, this application is construed by using a lithium-ion battery as an example of the secondary battery, but the secondary battery of this application is not limited to the lithium-ion battery. Specific technical solutions are as follows:

A first aspect of this application provides a negative electrode material. The negative electrode material includes a composite material. The composite material includes elemental silicon and a carbon material. A ratio of an intensity of a main peak to an intensity of a secondary peak of a first-cycle delithiation dQ/dV curve of the composite material is 1.15 to 1.65. The main peak of the dQ/dV curve means a characteristic peak corresponding to a voltage of 0.25 V to 0.3 V. The secondary peak of the dQ/dV curve means a characteristic peak corresponding to a voltage of 0.4 V to 0.45 V.

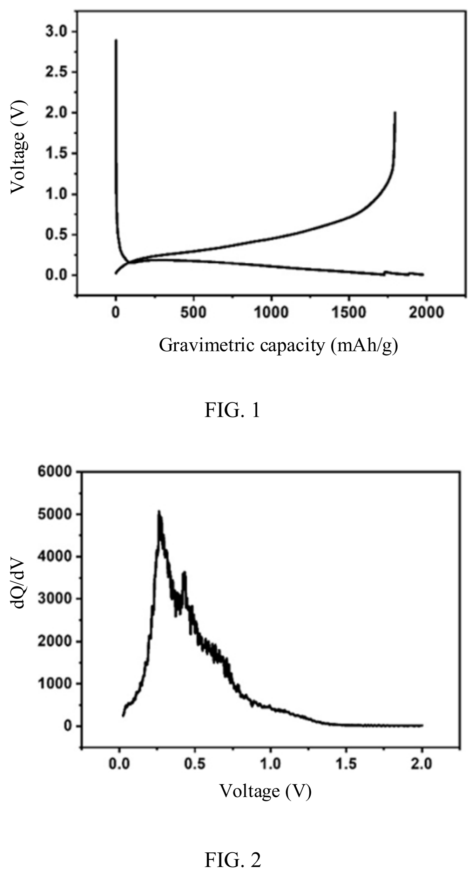

Through research, the applicant finds that a first-cycle charge-discharge curve of the composite material is obtained by using the first-cycle charge-discharge specific capacity of the composite material as abscissa and using voltage as ordinate. As an example, FIG. 1 shows a first-cycle charge-discharge curve of a composite material according to Embodiment 1. Subsequently, a first-order derivative of the first-cycle delithiation specific capacity Q of the composite material with respect to the voltage V is computed, and then the first-order derivative is plotted against the voltage V to obtain a differential capacity curve. As an example, FIG. 2 is a differential capacity curve of a composite material during first-cycle delithiation according to Embodiment 1. The differential capacity curve reflects the capacity available from the composite material per unit voltage range. If the capacity is relatively high on a specified voltage plateau, then a very large amount of capacity is contributed in a very small range of fluctuating voltages, and is exhibited as a characteristic peak on the curve. Each characteristic peak represents an electrochemical reaction. The characteristic peak corresponding to the voltage plateau 0.25 V to 0.3 V represents the delithiation reaction of amorphous LiₓSi. The characteristic peak corresponding to the voltage plateau 0.4 V to 0.45 V represents the delithiation reaction of crystalline Li₁₅Si₄. The higher the peak intensity of the characteristic peak at the voltage plateau 0.4 V to 0.45 V, the larger the amount of the crystalline Li₁₅Si₄, and the higher the percentage of the delithiation reaction of the crystalline Li₁₅Si₄, thereby deteriorating the cycle performance and expansion resistance of the composite material. When the ratio of the intensity of a main peak to the intensity of a secondary peak of a first-cycle delithiation dQ/dV curve falls within 1.15 to 1.65, the secondary battery achieves a relatively high specific capacity, and the cycle performance and expansion resistance of the secondary battery are improved.

Specifically, the ratio of the intensity of the main peak to the intensity of the secondary peak of the first-cycle delithiation dQ/dV curve of the composite material may be 1.15, 1.20, 1.25, 1.30, 1.35, 1.40, 1.45, 1.50, 1.55, 1.60, 1.65, or a value falling within a range formed by any two thereof. Optionally, the ratio of the intensity of the main peak to the intensity of the secondary peak of the first-cycle delithiation dQ/dV curve of the composite material is 1.25 to 1.55. When the ratio of the intensity of the main peak to the intensity of the secondary peak of the first-cycle delithiation dQ/dV curve of the composite material is unduly low (for example, lower than 1.15), the percentage of the delithiation reaction of the crystalline Li₁₅Si₄ is relatively high, thereby deteriorating the cycle performance and expansion resistance of the composite material. When the ratio of the intensity of the main peak to the intensity of the secondary peak of the first-cycle delithiation dQ/dV curve of the composite material is unduly high (for example, higher than 1.65), the percentage of the delithiation reaction of amorphous LiₓSi is relatively high, thereby impairing exertion of the gravimetric capacity and energy density of the composite material. By controlling the ratio of the intensity of the main peak to the intensity of the secondary peak of the first-cycle delithiation dQ/dV curve of the composite material to fall within the above range, the secondary battery can achieve improved cycle performance and expansion resistance while maintaining a relatively high specific capacity.

Overall, in the negative electrode material provided in this application, the composite material includes elemental silicon and a carbon material, and the ratio of the intensity of the main peak to the intensity of the secondary peak of the first-cycle delithiation dQ/dV curve of the composite material is 1.15 to 1.65, so that the resulting secondary battery exhibits good cycle performance and expansion resistance.

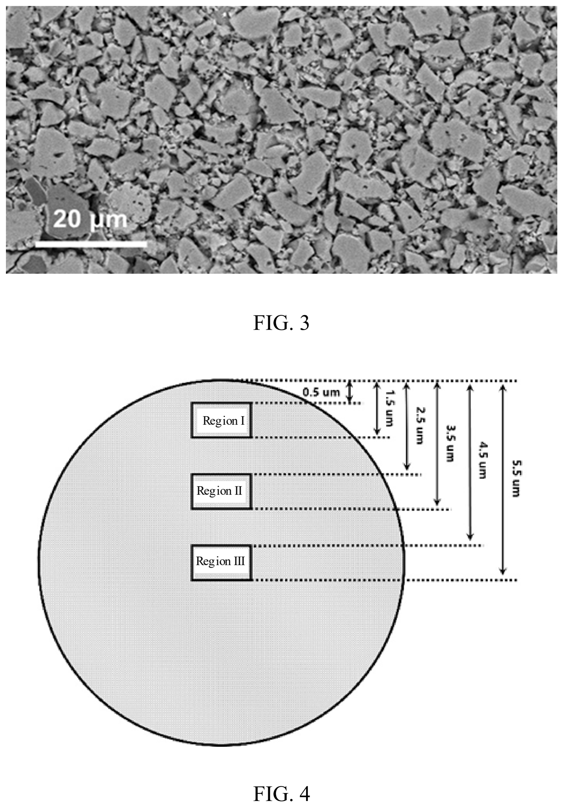

In some embodiments of this application, the elemental silicon includes at least one of silicon nanoparticles or silicon submicron particles. The above types of elemental silicon are conducive to alleviating fragmentation and pulverization of silicon particles, increasing the transmission rate of active ions such as lithium ions, and improving the cycle performance and expansion resistance of the secondary battery. As an example, FIG. 3 is a scanning electron microscope (SEM) image of a cross-section of a particle of a composite material according to Embodiment 1.

In some embodiments of this application, based on a total mass of the composite material, a mass percentage of the carbon material is a, a is 40 wt% to 90 wt%, a mass percentage of the elemental silicon is b, and b is 10 wt% to 60 wt%. Optionally, a mass percentage of the carbon material is a, a is 55 wt% to 70 wt%, a mass percentage of the elemental silicon is b, and b is 30 wt% to 45 wt%. As an example, a is 40 wt%, 45 wt%, 50 wt%, 55 wt%, 60 wt%, 65 wt%, 70 wt%, 75 wt%, 80 wt%, 85 wt%, 90 wt%, or a value falling within a range formed by any two thereof; b may be 10 wt%, 15 wt%, 20 wt%, 25 wt%, 30 wt%, 35 wt%, 40 wt%, 45 wt%, 50 wt%, 55 wt%, 60 wt%, or a value falling within a range formed by any two thereof. When the values of a and b are controlled to fall within the above ranges, the gravimetric capacity of the composite material can be well exerted, and the cycle performance and expansion resistance are maintained at a high level at the same time.

In some embodiments of this application, a ratio of a to b is 1 to 3. As an example, the ratio of a to b may be 1, 1.2, 1.4, 1.6, 1.8, 2.0, 2.2, 2.4, 2.6, 2.8, 3, or a value falling within a range formed by any two thereof. When the ratio of a to b falls within the above range, the volume effect of the composite material is made relatively low, and the expansion rate of particles is reduced, thereby improving the cycle performance and expansion performance of the secondary battery.

In some embodiments of this application, in a cross-section of a particle of the composite material, a silicon content in a region I is c, a silicon content in a region II is d, and a silicon content in a region III is e, satisfying: c > d > e. The region I is a region that is 0.5 µm to 1.5 µm distant from an edge of the cross-section along a radial direction of the cross-section, the region II is a region that is 2.5 µm to 3.5 µm distant from the edge of the cross-section along the radial direction of the cross-section, and the region III is a region that is 4.5 µm to 5.5 µm distant from the edge of the cross-section along the radial direction of the cross-section. As an example, FIG. 4 is a schematic diagram of different regions selected in a cross-section of a particle of a composite material according to Embodiment 1. When the silicon content c in the region I, the silicon content d in the region II, and the silicon content e in the region III in the cross-section of the particle of the composite material are controlled to satisfy the above relation, the composite material is enabled to exhibit a specified silicon concentration gradient, thereby being conducive to releasing stress of the overall material, reducing the expansion rate of the silicon material significantly, and improving the cycle performance and expansion resistance of the secondary battery.

In some embodiments of this application, a particle diameter Dv₅₀ of the composite material is 5 µm to 10 µm, and a particle diameter Dv₉₉ of the composite material is 15 µm to 25 µm. For example, the particle diameter Dv₅₀ may be 5 µm, 6 µm, 7 µm, 8 µm, 9 µm, 10 µm, or a value falling within a range formed by any two thereof. The particle diameter Dv₉₉ may be 15 µm, 16 µm, 17 µm, 18 µm, 19 µm, 20 µm, 21 µm, 22 µm, 23 µm, 24 µm, 25 µm, or a value falling within a range formed by any two thereof. When the particle diameters Dv₅₀ and Dv₉₉ of the composite material are controlled to fall within the above ranges, the uniformity of dispersion of the slurry and the kinetics of active ions are improved, and in turn, the cycle performance and expansion resistance of the secondary battery are improved.

In this application, Dv₅₀ is a particle diameter of the material corresponding to a cumulative volume percentage 50% in a volume-based particle size distribution curve as viewed from a small-diameter side. Dv₉₉ is a particle diameter of the material corresponding to a cumulative volume percentage 99% in a volume-based particle size distribution curve as viewed from a small-diameter side.

In some embodiments of this application, a specific surface area of the composite material is 1 m²/g to 50 m²/g. For example, the specific surface area of the composite material may be 1 m²/g, 5 m²/g, 10 m²/g, 15 m²/g, 20 m²/g, 25 m²/g, 30 m²/g, 35 m²/g, 40 m²/g, 45 m²/g, 50 m²/g, or a value falling within a range formed by any two thereof. When the specific surface area of the composite material falls within the above range, side reactions between the composite material and the electrolyte solution can be reduced, and the cycle performance and expansion resistance of the secondary battery are improved.

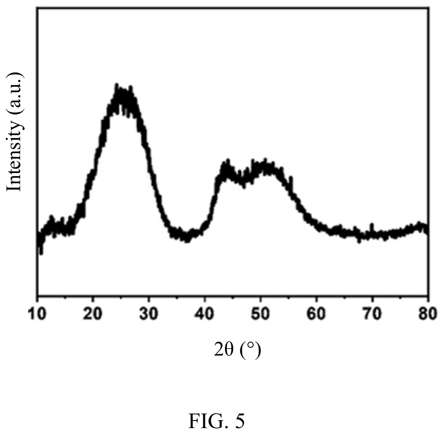

In some embodiments of this application, no crystallization peak of silicon exists in an X-ray diffraction pattern of the composite material. In other words, silicon exists in the composite material in an amorphous form. As an example, FIG. 5 is an X-ray diffraction pattern of a composite material according to Embodiment 1. When silicon in the composite material satisfies the above requirement, the space for accommodating the silicon is relatively large in the silicon material, and can absorb the volume expansion of the silicon that occurs during lithiation, thereby improving the cycle performance and expansion resistance of the secondary battery.

In some embodiments of this application, in a Raman spectrum of the composite material, an intensity ratio between a peak corresponding to a wavenumber 521 cm⁻¹ and a peak corresponding to a wavenumber 480 cm⁻¹, denoted as I₅₂₁/I₄₈₀, is 0.6 to 1. For example, the intensity ratio between the peak corresponding to a wavenumber 521 cm⁻¹ and the peak corresponding to a wavenumber 480 cm⁻¹, denoted as I₅₂₁/I₄₈₀, may be 0.6, 0.65, 0.7, 0.75, 0.8, 0.85, 0.9, 0.95, 1, or a value falling within a range formed by any two thereof. When the intensity ratio between the peak corresponding to a wavenumber 521 cm⁻¹ and the peak corresponding to a wavenumber 480 cm⁻¹, denoted as I₅₂₁/I₄₈₀, in the Raman spectrum of the composite material, falls within the above range, the content of amorphous silicon can be higher, thereby improving the cycle performance and expansion resistance of the secondary battery.

In some embodiments of this application, based on a total mass of the composite material, a mass percentage of oxygen in the composite material is 1 wt% to 5 wt%. For example, the mass percentage of oxygen in the composite material may be 1 wt%, 1.5 wt%, 2 wt%, 2.5 wt%, 3 wt%, 3.5 wt%, 4 wt%, 4.5 wt%, 5 wt%, or a value falling within a range formed by any two thereof. When the mass percentage of oxygen in the composite material falls within the above range, Li₂O generated in the first-cycle lithiation process can be used as a cushioning substance, thereby improving the cycle performance and expansion resistance of the secondary battery.

In some embodiments of this application, a first-cycle delithiation specific capacity of the composite material is 500 mAh/g to 2500 mAh/g. For example, when the first-cycle delithiation specific capacity of the composite material may be 500 mAh/g, 750 mAh/g, 1000 mAh/g, 1250 mAh/g, 1500 mAh/g, 1750 mAh/g, 2000 mAh/g, 2250 mAh/g, 2500 mAh/g, or a value falling within a range formed by any two thereof. When the first-cycle delithiation specific capacity of the composite material falls within the above range, the gravimetric capacity of the composite material can be well exerted, and the cycle performance and expansion resistance are maintained at a high level at the same time.

The method for preparing a composite material is not limited herein. As an example, the method for preparing the composite material may include, but is not limited to, the following steps: placing a porous carbon material into a reaction instrument, feeding a silicon-containing gas into the instrument, causing the silicon-containing gas to pyrolytically deposit as elemental silicon in the pores of the carbon material, and then feeding a carbon source gas into the instrument so that the carbon source gas is pyrolytically deposited as an amorphous carbon to obtain a composite material. The silicon-containing gas may include, but is not limited to, at least one of monosilane, disilane, trisilane, tetrasilane, chlorosilane, dichlorosilane, trichlorosilane, or tetrachlorosilane. The carbon source gas may include, but is not limited to, at least one of methane, acetylene, ethylene, ethane, propyne, propylene, propane, butyne, butene, or butane.

In general, the ratio of the intensity of the main peak to the intensity of the secondary peak of the first-cycle delithiation dQ/dV curve of the composite material is adjusted by changing the pyrolysis temperature, the gas flow rate, and the duration of feeding the silicon-containing gas. For example, by increasing the pyrolysis temperature, the ratio of the intensity of the main peak to the intensity of the secondary peak decreases; by decreasing the pyrolysis temperature, the ratio of the intensity of the main peak to the intensity of the secondary peak increases; by increasing the gas flow rate, the ratio of the intensity of the main peak to the intensity of the secondary peak decreases; by decreasing the gas flow rate, the ratio of the intensity of the main peak to the intensity of the secondary peak increases; by prolonging the duration of feeding the silicon-containing gas, the ratio of the intensity of the main peak to the intensity of the secondary peak decreases; and, by shortening the duration of feeding the silicon-containing gas, the ratio of the intensity of the main peak to the intensity of the secondary peak increases. The technician may adjust the pyrolysis temperature of the silicon-containing gas or carbon source gas, the gas flow rate of the silicon-containing gas or carbon source gas, and the duration of feeding the silicon-containing gas or carbon source gas may be adjusted as required. For example, the pyrolysis temperature of the silicon-containing gas or carbon source gas is 400 °C to 800 °C, the gas flow rate of the silicon-containing gas or carbon source gas is 50 sccm to 500 sccm, the duration of feeding the silicon-containing gas is 1 h to 20 h, and the duration of feeding the carbon source gas is 1 h to 20 h.

A second aspect of this application provides a secondary battery, including a positive electrode plate, a negative electrode plate, and a separator. The negative electrode plate includes the negative electrode material disclosed in any one of the preceding embodiments. Therefore, the secondary battery provided in this application exhibits good cycle performance and expansion resistance.

In some embodiments of this application, after the secondary battery is cycled at 25 °C for 100 cycles, based on a total mass of the composite material in the negative electrode plate, a mass percentage of oxygen in the composite material is 5 wt% to 15 wt%, where a cycling process in each of the cycles is to charge the secondary battery at a current of 1 C and then discharge the secondary battery at a current of 0.5 C until a cutoff current of 0.025 C. For example, the mass percentage of oxygen in the composite material may be 5 wt%, 6 wt%, 7 wt%, 8 wt%, 9 wt%, 10 wt%, 11 wt%, 12 wt%, 13 wt%, 14 wt%, 15 wt%, or a value falling within a range formed by any two thereof. When the mass percentage of oxygen in the composite material of the negative electrode plate that has been cycled for 100 cycles is controlled to fall within the above range, the structural deformation of the composite material during the charge and discharge can be suppressed, and the cycle performance of the secondary battery is improved.

The negative electrode plate of this application may further include a binder. The binder is not particularly limited in this application, as long as the objectives of this application can be achieved. For example, the binder may include, but is not limited to, at least one of polyacrylate ester, polyimide, polyamide, polyamideimide, polyvinylidene fluoride, poly(styrene-co-butadiene) (styrene-butadiene rubber), sodium alginate, polyvinyl alcohol, polytetrafluoroethylene, polyacrylonitrile, sodium carboxymethylcellulose, potassium carboxymethylcellulose, sodium hydroxymethyl cellulose, or potassium hydroxymethyl cellulose. The negative electrode plate that employs the above binder achieves high structural stability, and improves the cycle performance of the secondary battery.

The negative electrode plate of this application may further include a conductive agent. The conductive agent is not particularly limited in this application, as long as the objectives of this application can be achieved. For example, the conductive agent may include, but is not limited to, at least one of acetylene black, conductive carbon black (Super P), carbon nanotubes (CNTs), carbon fibers, flake graphite, Ketjen black, graphene, or the like. The mass percentages of the negative electrode material, conductive agent, or binder are not particularly limited herein, and may be selected by a person skilled in the art as actually required, as long as the objectives of this application can be achieved.

In this application, the negative electrode plate includes a negative current collector. The negative current collector is not particularly limited herein, as long as the objectives of this application can be achieved. For example, the negative current collector may include copper foil, copper alloy foil, nickel foil, stainless steel foil, titanium foil, foamed nickel, foamed copper, or composite current collector (for example, a carbon-copper composite current collector, a nickel-copper composite current collector, a titanium-copper composite current collector), or the like. The thickness of the negative current collector is not particularly limited herein as long as the objectives of this application can be achieved. For example, the thickness of the negative current collector is 6 µm to 12 µm. The thickness of the negative electrode plate is not particularly limited herein, as long as the objectives of this application can be achieved. For example, the thickness of the negative electrode plate is 50 µm to 150 µm.

In this application, the secondary battery further includes a positive electrode plate. The positive electrode plate includes a positive current collector and a positive electrode material layer disposed on at least one surface of the positive current collector. "Positive electrode material layer disposed on at least one surface of the positive current collector" means that the positive electrode material layer may be disposed on one surface of the positive current collector or on both surfaces of the positive electrode current collector along the thickness direction of the current collector. It is hereby noted that the "surface" here may be the entire region of the positive current collector, or a partial region of the positive current collector, without being particularly limited in this application, as long as the objectives of the application can be achieved. The positive current collector is not particularly limited herein, as long as the objectives of this application can be achieved. For example, the positive current collector may include aluminum foil, aluminum alloy foil, a composite current collector (for example, an aluminum-carbon composite current collector), or the like. The positive electrode material layer includes a positive active material. The positive active material is not particularly limited herein as long as the objectives of this application can be achieved. For example, the positive active material may include at least one of lithium nickel cobalt manganese oxide (for example, typically NCM811, NCM622, NCM523, NCM111), lithium nickel cobalt aluminum oxide, lithium iron phosphate, a lithium-rich manganese-based material, lithium cobalt oxide (LiCoO₂), lithium manganese oxide, lithium manganese iron phosphate, or lithium titanium oxide. The positive electrode material layer further includes a conductive agent and a binder. The types of the conductive agent and the binder are not particularly limited herein, as long as the objectives of this application can be achieved. For example, the conductive agent and binder may be at least one selected from the examples enumerated above. The mass percentages of the positive active material, conductive agent, or binder in the positive electrode material layer are not particularly limited herein, and may be selected by a person skilled in the art as actually required, as long as the objectives of this application can be achieved. The thicknesses of the positive current collector and positive electrode material layer are not particularly limited herein, as long as the objectives of this application can be achieved. For example, the thickness of the positive current collector is 6 µm to 12 µm, and the thickness of the positive electrode material layer is 30 µm to 120 µm. The thickness of the positive electrode plate is not particularly limited herein, as long as the objectives of this application can be achieved. For example, the thickness of the positive electrode plate is 50 µm to 150 µm.

In this application, the secondary battery further includes a separator. The separator is configured to separate the positive electrode plate from the negative electrode plate, prevent a short circuit inside the secondary battery, and allow electrolyte ions to pass freely without affecting the electrochemical charge and discharge processes. The separator is not particularly limited herein, as long as the objectives of this application can be achieved. For example, the separator may be made of a material including but not limited to at least one of: a polyethylene (PE)- or polypropylene (PP)-based polyolefin (PO) separator, a polyester (such as polyethylene terephthalate (PET) film), cellulose, polyimide (PI), polyamide film (PA), spandex, or aramid. The type of the separator may include at least one of a woven film, a non-woven film, a microporous film, a composite film, a laminated film, or a spinning film.

For example, the separator may include a substrate layer and a surface treatment layer. The substrate layer may be a non-woven fabric, film or composite film, which, in each case, is porous. The material of the substrate layer may include at least one of polyethylene, polypropylene, polyethylene terephthalate, or polyimide. Optionally, the substrate layer may be a polypropylene porous film, a polyethylene porous film, a polypropylene non-woven fabric, a polyethylene non-woven fabric, or a polypropylene-polyethylene-polypropylene porous composite film. Optionally, the surface treatment layer is disposed on at least one surface of the substrate layer. The surface treatment layer may be a polymer layer or an inorganic compound layer, or a layer compounded of a polymer and an inorganic compound. For example, the inorganic compound layer includes inorganic particles and a binder. The inorganic particles are not particularly limited, and may include at least one of: aluminum oxide, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is not particularly limited herein. For example, the binder may be at least one of the binders enumerated above. The polymer layer includes a polymer. The material of the polymer includes at least one of polyamide, polyacrylonitrile, an acrylate polymer, polyacrylic acid, polyacrylic acid sodium salt, polyvinylpyrrolidone, polyvinyl ether, polyvinylidene fluoride, or poly(vinylidene fluoride-co-hexafluoropropylene).

In this application, the secondary battery further includes an electrolyte solution. The electrolyte solution includes a lithium salt and a nonaqueous solvent. The lithium salt may include at least one of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, Li₂SiF₆, lithium bis(oxalato)borate (LiBOB), or lithium difluoroborate. The concentration of the lithium salt in the electrolyte solution is not particularly limited in this application, as long as the objectives of this application can be achieved. For example, the concentration of the lithium salt in the electrolyte solution is 0.9 mol/L to 1.5 mol/L. As an example, the concentration of the lithium salt in the electrolyte solution may be 0.9 mol/L, 1.0 mol/L, 1.1 mol/L, 1.3 mol/L, 1.5 mol/L, or a value falling within a range formed by any two thereof. The nonaqueous solvent is not particularly limited in this application, as long as the objectives of this application can be achieved. For example, the nonaqueous solvent may include, but is not limited to, at least one of a carbonate compound, a carboxylate compound, an ether compound, or other organic solvents. The carbonate compound may include, but is not limited to, at least one of a chain carbonate compound, a cyclic carbonate compound, or a fluorocarbonate compound. The chain carbonate compound may include, but is not limited to, at least one of dimethyl carbonate (DMC), diethyl carbonate (DEC), dipropyl carbonate (DPC), methyl propyl carbonate (MPC), ethylene propyl carbonate (EPC), or ethyl methyl carbonate (EMC). The cyclic carbonate compound may include, but is not limited to, at least one of ethylene carbonate (EC), propylene carbonate (PC), butylene carbonate (BC), or vinyl ethylene carbonate (VEC). The fluorocarbonate compound may include, but is not limited to, at least one of fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, or trifluoromethyl ethylene carbonate. The carboxylate compound may include, but is not limited to, at least one of methyl formate, methyl acetate, ethyl acetate, n-propyl acetate, tert-butyl acetate, methyl propionate, ethyl propionate, propyl propionate, γ-butyrolactone, decanolactone, valerolactone, or caprolactone. The ether compound may include, but is not limited to, at least one of dibutyl ether, tetraglyme, diglyme, 1,2-dimethoxyethane, 1,2-diethoxyethane, 1-ethoxy-1-methoxyethane, 2-methyltetrahydrofuran, or tetrahydrofuran. The other organic solvent may include, but is not limited to, at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate.

The secondary battery of this application further includes a packaging bag. The packaging bag is configured to accommodate a positive electrode plate, a separator, a negative electrode plate, an electrolyte solution, and other components known in the art in the secondary battery. Such other components are not limited in this application. The packaging bag is not particularly limited in this application, and may be a packaging bag well known in the art, as long as the objectives of this application can be achieved.

The secondary battery is not particularly limited in this application, and may be any device in which an electrochemical reaction occurs. In some embodiments, the secondary battery may include, but is not limited to, a lithium metal secondary battery, a lithium-ion secondary battery (lithium-ion battery), a lithium polymer secondary battery, a lithium-ion polymer secondary battery, or the like.

The process of preparing the secondary battery in this application is well known to a person skilled in the art, and is not particularly limited in this application. For example, the preparation process may include, but is not limited to, the following steps: stacking the positive electrode plate, the separator, and the negative electrode plate in sequence, and performing operations such as winding and folding as required to obtain a jelly-roll electrode assembly; putting the electrode assembly into a package, injecting the electrolyte solution into the package, and sealing the package to obtain a secondary battery; or, stacking the positive electrode plate, the separator, and the negative electrode plate in sequence, and then fixing the four corners of the entire stacked structure by use of adhesive tape to obtain a stacked-type electrode assembly, putting the electrode assembly into a package, injecting the electrolyte solution into the package, and sealing the package to obtain a secondary battery. In addition, an overcurrent prevention element, a guide plate, and the like may be placed into the packaging bag as required, so as to prevent the rise of internal pressure, overcharge, and overdischarge of the secondary battery.

A third aspect of this application provides an electronic device. The electronic device includes the secondary battery disclosed in any one of the preceding embodiments. Therefore, the electronic device provided in this application exhibits good operating performance.

The electronic device is not particularly limited herein, and may be any electronic device known in the prior art. In some embodiments, the electronic device may include, but not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, and the like.

### Embodiments

The implementations of this application are described below in more detail with reference to embodiments and comparative embodiments. Various tests and evaluations are performed by the following methods. In addition, unless otherwise specified, the word "parts" means parts by mass, and the symbol "%" means a percentage by mass.

### Test methods and devices:

### Testing the content of elemental silicon:

The content of elemental silicon in the composite material may be measured and represented by using an inductively coupled plasma (ICP) optical emission spectrometer.

### Measuring the silicon content in the region I, region II, and region III in the cross-section of a particle of the composite material:

Affixing a conductive adhesive onto a specimen holder, laying powdered specimens of the composite material in each embodiment flat on the conductive adhesive, blowing away the unadhered powder with a puffer bulb, spraying gold, and cutting the particle of the powdered specimens by use of an argon plasma instrument to obtain a cross-section. Capturing an SEM image of the powdered specimen by using energy dispersive X-ray spectroscopy (EDS) of a Philips XL-30 field emission scanning electron microscope (SEM) under the test conditions that the accelerating voltage is 10 kV and the emission current is 10 mA. Subsequently, selecting the region I, region II, and region III in the SEM image, and testing the mass percentage of silicon in the particle.

### Testing the specific capacity:

Process of preparing a negative electrode plate: Using a composite material disclosed in this application as a negative active material, using acetylene black as a conductive agent, and using sodium alginate as a binder. The mass ratio between the negative active material, the acetylene black, and the sodium alginate is 70: 20: 10. Mixing well the negative active material, the acetylene black, and the sodium alginate aqueous solution to obtain a mixture slurry, applying the mixture slurry evenly on a copper foil, and oven-drying the slurry to obtain a negative electrode plate.

Process of preparing a positive electrode plate: Using Super P as a conductive agent, and using PVDF as a binder in which the mass ratio between the positive active material (LiFePO₄), the Super P, and the PVDF is 70: 20: 10. Mixing well the positive active material, Super P, and 10 wt% PVDF solution to obtain a mixture slurry, applying the mixture slurry evenly on an aluminum foil, and oven-drying the slurry to obtain a positive electrode plate.

Using a mixed solution of ethylene carbonate (EC) and dimethyl carbonate (DMC) (the volume ratio between the EC and the DMC is 1: 1) dissolved in 1 mol/L LiPF₆ and 5 vol% fluorinated ethylene carbonate (FEC) as an electrolyte solution, using a Celgard 2400 separator, assembling a button half-cell in a glovebox by using a lithium sheet as a counter electrode, and assembling a button full-cell in the glovebox by using the positive electrode plate as a counter electrode.

Performing a charge-discharge test on the half-cell and the full-cell separately in a Land battery test system (LAND CT2001A). The half-cell is tested in an operating voltage range of 0.01 V to 2 V by the following process: discharging the half-cell at a constant current of 0.1 C until the voltage reaches 0.01 V, leaving the half-cell to stand for 5 minutes, and then discharging the half-cell at a constant current of 50 µA until the voltage reaches 0.01 V, leaving the half-cell to stand for 5 minutes, charging the half-cell at a constant current of 0.1 C until the voltage reaches 2.0 V, leaving the half-cell to stand for 5 minutes, and then recording the first-cycle recharge capacity of the half-cell as a first-cycle delithiation specific capacity. The full-cell is tested in an operating voltage range of 2.4 V to 3.8 V by the following process: charging the full-cell at a constant current of 0.1 C until the voltage reaches 3.8 V, and then charging the full-cell at a constant voltage of 3.8 V until a cutoff current of 50 µA, leaving the full-cell to stand for 5 minutes, discharging the full-cell at a constant current of 0.1 C until the voltage reaches 2.4 V, leaving the full-cell to stand for 5 minutes, recording the first-cycle discharge capacity of the full-cell, and calculating the first-cycle discharge specific capacity as: first-cycle discharge specific capacity of the full-cell = first-cycle discharge capacity of the full cell/mass of the positive active material.

### Testing the oxygen content of the composite material in the negative electrode plate after 100 cycles:

Disassembling a secondary battery that has been cycled for 100 cycles, so as to obtain a negative electrode plate, placing the negative electrode plate into a glovebox for natural drying, and then scraping off the powder carefully with a knife, and finally testing and obtaining the oxygen content by using a Germany Elementar elemental analyzer.

### Testing the thickness expansion rate of the negative electrode plate:

Disassembling secondary batteries that have been and have not been cycled for 100 cycles respectively, so as to obtain negative electrode plates respectively. Measuring the thickness of the electrode plate for 12 times with a vernier caliper and averaging out the measured values to obtain the thickness of the electrode plate. If the thickness of the copper foil is a, the thickness of the electrode plate before 100 cycles is b, and the thickness of the electrode plate after 100 cycles is c, then the thickness expansion rate of the negative electrode plate after 100 cycles is k calculated as k = (c - b)/(b - a) × 100%.

### Testing the cycle capacity retention rate:

Discharging the half-cell in an 25 °C environment at a constant current of 0.5 C until the voltage reaches 0.01 V, leaving the half-cell to stand for 5 minutes, and then discharging the half-cell at a constant current of 50 µA until the voltage reaches 0.01 V, leaving the half-cell to stand for 5 minutes, and then charging the half-cell at a constant current of 0.5 C until the voltage reaches 2.0 V, leaving the half-cell to stand for 5 minutes, and recording the first-cycle discharge capacity. Performing the same charging and discharging steps as above for 50 cycles, and recording the 50^{th}-cycle discharge capacity.
50th-cycle capacity retention rate of the half-cell (%) = (50th-cycle discharge capacity/first-cycle discharge capacity) × 100%.

Charging the full-cell in an 25 °C environment at a constant current of 0.5 C until the voltage reaches 3.8 V, and then charging the full-cell at a constant voltage of 3.8 V until the current reaches 50 µA, leaving the full-cell to stand for 5 minutes, and then discharging the full-cell at a constant current of 0.5 C until the voltage reaches 2.4 V, leaving the full-cell to stand for 5 minutes, and recording the first-cycle discharge capacity. Performing the same charging and discharging steps as above for 100 cycles, and recording the 100^{th}-cycle discharge capacity.
100th-cycle capacity retention rate of the full-cell (%) = (100th-cycle discharge capacity/first-cycle discharge capacity) × 100%.

### Embodiment 1

### <Preparing a composite material>

Placing 25 grams of porous carbon material into a reaction instrument, and feeding monosilane into the instrument at a flow rate of 200 sccm at 500 °C for 10 hours to pyrolytically deposit the monosilane into elemental silicon within the pores of the porous carbon material, and then feeding acetylene into the instrument at a flow rate of 200 sccm at 500 °C for 5 hours to pyrolytically deposit the acetylene into amorphous carbon, so as to obtain a composite material.

### <Preparing a negative electrode plate>

Using a composite material disclosed in this application as a negative active material, using acetylene black as a conductive agent, and using sodium alginate as a binder. The mass ratio between the negative active material, the acetylene black, and the sodium alginate is 70: 20: 10. Mixing well the negative active material and acetylene black at a specified ratio, grinding the mixture uniformly, adding a sodium alginate aqueous solution at a specified mass percentage, stirring the mixture for 4 hours, applying the mixture slurry evenly on a copper foil, vacuum-drying the slurry at 70 °C for 12 hours, and then stamping the foil to form a circular electrode plate of 10 mm in diameter. The coating concentration of the negative active material is 1.0 mg/cm².

### <Preparing a positive electrode plate>

Using Super P as a conductive agent, and using PVDF as a binder in which the mass ratio between the positive active material (LiFePO₄), the Super P, and the PVDF is 70: 20: 10. Mixing well the positive active material and Super P at a specified ratio, grinding the mixture uniformly, adding 10 wt% PVDF solution, stirring the mixture for 4 hours, and then applying the mixture slurry evenly on an aluminum foil, vacuum-drying the slurry at 70 °C for 12 hours, and then stamping the foil to form a circular electrode plate of 10 mm in diameter. The coating concentration of the positive active material is 7.0 mg/cm².

### <Preparing an electrolyte solution>

Stirring well a mixed solution of ethylene carbonate (EC) and dimethyl carbonate (DMC) (the volume ratio between the EC and the DMC is 1: 1) containing 1 mol/L LiPF₆ and 5 vol% fluorinated ethylene carbonate (FEC) in an dry argon atmosphere glovebox to obtain an electrolyte solution.

### <Preparing a separator>

Using a 20 µm-thick porous polyethylene film (supplied by Celgard) as a separator.

### <Preparing a lithium-ion battery>

Using a lithium sheet and a positive electrode plate as a counter electrode separately to match the negative electrode plate, and stacking the negative electrode plate, separator, lithium sheet or positive electrode plate sequentially to assemble a button half-cell and a full-cell respectively in a glovebox.

### Embodiments 2 to 8

Identical to Embodiment 1 except that the relevant preparation parameters are adjusted according to Table 1 in <Preparing a composite material>.

### Comparative Embodiments 1 to 4

Identical to Embodiment 1 except that the relevant preparation parameters are adjusted according to Table 1 in <Preparing a composite material>.

Table 1, Table 2, and Table 3 show the preparation parameters, powder performance parameters, and electrical performance parameters of the embodiments and comparative embodiments.

**Table 1**

| | Dosage of porous carbon (g) | Pyrolysis temperature of monosilane/acetylene (°C) | Flow rate of monosilane/acetylene (sccm) | Duration of feeding monosilane (h) | Duration of feeding acetylene (h) |
|---|---|---|---|---|---|
| Embodiment 1 | 25 | 500 | 200 | 10 | 5 |
| Embodiment 2 | 25 | 500 | 200 | 12 | 5 |
| Embodiment 3 | 25 | 500 | 200 | 10.5 | 5 |
| Embodiment 4 | 25 | 500 | 200 | 10.3 | 5 |
| Embodiment 5 | 25 | 500 | 200 | 9 | 5 |
| Embodiment 6 | 25 | 500 | 200 | 8.5 | 5 |
| Embodiment 7 | 25 | 500 | 200 | 8 | 5 |
| Embodiment 8 | 25 | 500 | 200 | 5 | 5 |
| Comparative Embodiment 1 | 25 | 500 | 200 | 16 | 5 |
| Comparative Embodiment 2 | 25 | 500 | 200 | 14 | 5 |
| Comparative Embodiment 3 | 25 | 500 | 200 | 13 | 5 |
| Comparative Embodiment 4 | 25 | 500 | 200 | 2 | 5 |

**Table 2**

| | a (%) | b (%) | a/b | c (%) | d (%) | e (%) | Dv₅₀/Dv₉₉ (µm) | Specific surface area (m²/g) | I₅₂₁/I₄₈₀ | Oxygen content (%) |
|---|---|---|---|---|---|---|---|---|---|---|
| Embodiment 1 | 55.6 | 38.8 | 1.43 | 43.3 | 39.6 | 35.1 | 5.6/15.9 | 6.2 | 0.767 | 1.1 |
| Embodiment 2 | 51.2 | 46.6 | 1.10 | 49.8 | 47.2 | 40.2 | 5.7/16.4 | 6.3 | 0.873 | 1.8 |
| Embodiment 3 | 54.3 | 40.4 | 1.34 | 45.0 | 41.9 | 34.3 | 5.7/16.2 | 6.0 | 0.798 | 2.2 |
| Embodiment 4 | 55.3 | 39.6 | 1.40 | 44.1 | 38.8 | 36.9 | 5.7/16.0 | 6.8 | 0.792 | 2.7 |
| Embodiment 5 | 60.2 | 33.4 | 1.80 | 36.7 | 33.0 | 29.8 | 5.6/15.8 | 7.3 | 0.749 | 3.0 |
| Embodiment 6 | 61.1 | 32.2 | 1.90 | 35.1 | 31.0 | 28.9 | 5.5/15.8 | 7.7 | 0.709 | 3.8 |
| Embodiment 7 | 62.5 | 30.6 | 2.04 | 33.4 | *30.9* | 27.6 | 5.5/15.8 | 7.8 | 0.681 | 3.4 |
| Embodiment 8 | 69.6 | 21.7 | 3.21 | 25.7 | 20.8 | 16.9 | 5.5/15.6 | 8.7 | 0.627 | 3.6 |
| Comparative Embodiment 1 | 39.0 | 57.8 | 0.67 | 59.7 | 56.3 | 55.6 | 7.8/24.3 | 2.7 | 0.950 | 3.0 |
| Comparative Embodiment 2 | 45.0 | 51.6 | 0.87 | 54.3 | 50.8 | 49.0 | 7.6/21.5 | 3.6 | 0.924 | 1.8 |
| Comparative Embodiment 3 | 46.6 | 49.0 | 0.95 | 53.2 | 49.4 | 44.6 | 6.3/17.1 | 5.7 | 0.893 | 2.9 |
| Comparative Embodiment 4 | 84.7 | 10.4 | 8.14 | 17.8 | 11.7 | 4.3 | 5.5/15.5 | 10.8 | 0.864 | 4.7 |

**Table 3**

| | dQ/dV Intensity ratio between main peak and secondary peak | First-cycle delithiation specific capacity (mAh/g) | 50^{th}-cycle capacity retention rate of half-cell (%) | First-cycle discharge specific capacity of full-cell (mAh/g) | 100^{th}-cycle capacity retention rate of full-cell (%) | Thickness expansion rate of negative electrode plate after 100 cycles | Oxygen content of composite material after cycling (%) |
|---|---|---|---|---|---|---|---|
| Embodiment 1 | 1.36 | 1725.3 | 90.6 | 141.1 | 91.8 | 23.5 | 13.2 |
| Embodiment 2 | 1.21 | 1981.8 | 81.5 | 142.0 | 74.9 | 35.9 | 9.8 |
| Embodiment 3 | 1.25 | 1775.6 | 89.8 | 141.7 | 90.2 | 26.2 | 12.4 |
| Embodiment 4 | 1.31 | 1745.3 | 90.2 | 141.4 | 91.1 | 25.1 | 12.7 |
| Embodiment 5 | 1.43 | 1594.9 | 90.9 | 132.8 | 91.9 | 21.5 | 13.2 |
| Embodiment 6 | 1.50 | 1560.1 | 91.0 | 131.1 | 92.2 | 20.9 | 13.6 |
| Embodiment 7 | 1.55 | 1495.3 | 91.5 | 129.6 | 92.6 | 20.4 | 14.2 |
| Embodiment 8 | 1.63 | 1158.4 | 93.2 | 126.4 | 92.8 | 18.4 | 17.6 |
| Comparative Embodiment 1 | 0.45 | 2459.2 | 69.9 | 143.4 | 45.5 | 46.5 | 7.6 |
| Comparative Embodiment 2 | 0.77 | 2236.8 | 75.2 | 142.6 | 63.4 | 41.7 | 8.2 |
| Comparative Embodiment 3 | 1.12 | 2030.6 | 78.8 | 142.1 | 65.8 | 38.6 | 8.9 |
| Comparative Embodiment 4 | 1.67 | 652.0 | 96.8 | 117.7 | 93.4 | 17.8 | 19.2 |

Referring to Table 1, Table 2, and Table 3, as can be seen from Embodiments 1 to 8 and Comparative Embodiments 1 to 4, when the ratio of the intensity of the main peak to the intensity of the secondary peak of the first-cycle delithiation dQ/dV curve of the composite material is unduly low (as in Comparative Embodiments 1 to 3), although the lithium-ion battery exhibits a relatively high specific capacity, the cycle performance and expansion resistance of the battery deteriorate significantly. When the ratio of the intensity of the main peak to the intensity of the secondary peak of the first-cycle delithiation dQ/dV curve of the composite material is unduly high (as in Comparative Embodiment 4), although the lithium-ion battery achieves relatively good cycle performance and expansion resistance, the specific capacity decreases significantly. By controlling the ratio of the intensity of the main peak to the intensity of the secondary peak of the first-cycle delithiation dQ/dV curve of the composite material to fall within the range specified herein, the lithium-ion battery can achieve good cycle performance and expansion resistance in addition to a relatively high specific capacity.

Further, as can be seen from Embodiment 1, Embodiment 3, Embodiment 4, Embodiment 5, Embodiment 6, and Embodiment 7, the specific capacity, cycle performance, and expansion resistance of the lithium-ion battery are more balanced by controlling the ratio of the intensity of the main peak to the intensity of the secondary peak of the first-cycle delithiation dQ/dV curve to fall within 1.25 to 1.55.

The oxygen element content of the composite material in the negative electrode plate after cycling of the lithium-ion battery also affects the cycle performance of the lithium-ion battery. As can be seen from Embodiments 1 to 7 and Embodiment 8, the specific capacity, cycle performance, and expansion resistance of the lithium-ion battery are more balanced by controlling the oxygen content of the composite material in the cycled negative electrode plate to fall within the range specified herein, thereby improving the overall performance of the lithium-ion battery.

Dv₅₀, Dv₉₉, specific surface area, carbon material, and elemental silicon of the composite material generally also affect the performance of the lithium ion battery. As can be seen from Embodiments 1 to 8, the specific capacity, cycle performance, and expansion resistance of the lithium-ion battery are caused to be high by controlling Dv₅₀, Dv₉₉, and Dv₅₀/Dv₉₉ of the composite material as well as the mass percentages of the carbon material and elemental silicon to fall within the ranges specified herein.

What is described above is merely exemplary embodiments of this application, but is not intended to limit this application. Any modifications, equivalent replacements, improvements, and the like made without departing from the spirit and principles of this application still fall within the protection scope of this application.

## Claims

1. A negative electrode material, wherein the negative electrode material comprises a composite material, the composite material comprises elemental silicon and a carbon material, a ratio of an intensity of a main peak to an intensity of a secondary peak of a first-cycle delithiation dQ/dV curve of the composite material is 1.15 to 1.65, the main peak of the dQ/dV curve means a characteristic peak corresponding to a voltage of 0.25 V to 0.3 V, and the secondary peak of the dQ/dV curve means a characteristic peak corresponding to a voltage of 0.4 V to 0.45 V.

2. The negative electrode material according to claim 1, wherein the elemental silicon comprises at least one of silicon nanoparticles or silicon submicron particles.

3. The negative electrode material according to claim 1 or 2, wherein, based on a total mass of the composite material, a mass percentage of the carbon material is a, a is 40 wt% to 90 wt%, a mass percentage of the elemental silicon is b, and b is 10 wt% to 60 wt%.

4. The negative electrode material according to any one of claims 1 to 3, wherein, based on a total mass of the composite material, a mass percentage of the carbon material is a, a is 55 wt% to 70 wt%, a mass percentage of the elemental silicon is b, and b is 30 wt% to 45 wt%.

5. The negative electrode material according to claim 3 or 4, wherein a ratio of a to b is 1 to 3.

6. The negative electrode material according to any one of claims 1 to 5, wherein, in a cross-section of a particle of the composite material, a silicon content in a region I is c, a silicon content in a region II is d, and a silicon content in a region III is e, satisfying: c > d > e; wherein, the region I is a region being 0.5 µm to 1.5 µm distant from an edge of the cross-section along a radial direction of the cross-section, the region II is a region being 2.5 µm to 3.5 µm distant from the edge of the cross-section along the radial direction of the cross-section, and the region III is a region being 4.5 µm to 5.5 µm distant from the edge of the cross-section along the radial direction of the cross-section.

7. The negative electrode material according to any one of claims 1 to 6, wherein the composite material satisfies at least one of the following conditions:
(1) a particle diameter Dv₅₀ of the composite material is 5 µm to 10 µm, and a particle diameter Dv₉₉ of the composite material is 15 µm to 25 µm;
(2) a specific surface area of the composite material is 1 m²/g to 50 m²/g;
(3) no crystallization peak of silicon exists in an X-ray diffraction pattern of the composite material;
(4) in a Raman spectrum of the composite material, an intensity ratio between a peak corresponding to a wavenumber 521 cm⁻¹ and a peak corresponding to a wavenumber 480 cm⁻¹, being I₅₂₁/I₄₈₀, is 0.6 to 1;
(5) based on a total mass of the composite material, a mass percentage of oxygen in the composite material is 1 wt% to 5 wt%; or
(6) a first-cycle delithiation specific capacity of the composite material is 500 mAh/g to 2500 mAh/g.

8. A secondary battery, comprising a positive electrode plate, a negative electrode plate, and an electrolyte solution, wherein the negative electrode plate comprises the negative electrode material according to any one of claims 1 to 7.

9. The secondary battery according to claim 8, wherein, after the secondary battery is cycled at 25 °C for 100 cycles, based on a total mass of the composite material in the negative electrode plate, a mass percentage of oxygen in the composite material is 5 wt% to 15 wt%, wherein a cycling process in each of the cycles is to charge the secondary battery at a current of 1 C and then discharge the secondary battery at a current of 0.5 C until a cutoff current of 0.025 C.

10. An electronic device, comprising the secondary battery according to claim 8 or 9.
